# EUROPEAN PATENT APPLICATION

(11) **EP 4 759 861 A1**
(43) Date of publication of application: **17.06.2026**
(21) Application number: 24219119.5
(22) Date of filing: 11.12.2024
(51) Int. Cl.: C08G 65/00, C08F 2/48, C08F 293/00, C08G 65/48, C08G 65/334

(54) **A METHOD FOR OBTAINING AT LEAST ONE COMPOUND WITH SURFACE ACTIVE PROPERTIES AND THE COMPOUNDS OBTAINED BY SAID METHOD**

(71) Applicant: Freie Universität Berlin, 14195 Berlin (DE)
(72) Inventor: HAAG, Rainer, 12209 Berlin (DE); SINGH, Abhishek Kumar, 12247 Berlin (DE)
(74) Representative: Maikowski & Ninnemann Patentanwälte Partnerschaft mbB

(57) **Abstract**

The present invention relates to a method for obtaining at least one compound with surface active properties, wherein the at least one compound comprises a first hydrophobic block and a second hydrophilic block, wherein the method comprises irradiating a reaction mixture, wherein the reaction mixture comprises at least one hydrophobic compound comprising at least one double or triple bond and at least one hydrophilic compound comprising at least one thiol-moiety, and at least one photo-initiator.

## Description

The present invention relates to a method for obtaining at least one compound with surface active properties and the compounds obtained by said method.

Surfactants are used in a wide variety of household or workplace cleaning and detergent formulations, in personal care products found in most bathrooms, in cosmetics and pharmaceuticals, and in a variety of important industrial applications. The special feature of surfactants is their ability to mobilize and combine substances - usually water, oils, fats, and solvents - that would otherwise not mix due to their incompatible molecular properties. Such surface-active compounds are also employed as lubricants in industrial applications, therefore in the following the terms 'surfactant', 'detergent' and 'lubricant' are used interchangeably. Surfactants are also widely used in biochemical, cell biology, and molecular biology research. They are widely used for cell lysis, membrane protein solubilization, protein purification, and electrophoresis applications. At present, specifically droplet-based microfluidics plays an important role in bioanalytical analysis, where fluorosurfactant are the key factor that generates stable droplets that contribute to error-free results.

Specifically in the field of membrane protein extraction, solubilization and stabilization detergents are an indispensable tool and there is a high scientific, technical and medical interest in such compounds (L. H. Urner et al., Modular detergents tailor the purification and structural analysis of membrane proteins including G-protein coupled receptors, Nature Commun. 2020, 11, 5641). While in case of droplet-based microfluidics detergent or surfactant molecules notably fluorosurfactants are capable of forming stable microfluidic droplets and are employed as pico- to nanoliter volume reactors in chemistry and biology (M. S. Chowdhury et al., Dendronized fluorosurfactant for highly stable water-in-fluorinated oil emulsions with minimal inter-droplet transfer of small molecules, Commun. 2019, 10, 4546; O. Wagner et. Al., Biocompatible fluorinated polyglycerols for droplet microfluidics as an alternative to PEG-based copolymer surfactant, Lab Chip, 2016, 16, 65-692).

In the various applications, the structural arrangement of surfactants plays a crucial role in achieving the specific applications. One of the general advantages of these small polymers (surfactants) is that they can be very specifically tailored to the respective requirements. The three different structural segments, i.e. hydrophobic, hydrophilic and linker, can be modified and the overall properties of the surfactants can be changed for the respective applications.

Despite their scientific and economic importance, there are some challenges in the chemistry of currently available surfactants that need to be addressed, especially the multistep synthesis and the required complicated purification techniques that limit the scale-up of the desired product. As well, the limitation of the available head groups with different polarity orders is another major challenge. Most of the non-ionic head groups require a multistep synthetic approach with various purification steps, like sugar-based surfactants, as e.g., DDM that are commercially available and used in biochemistry to stabilize and purify proteins. On the other hand, the commercially available triblock fluorosurfactant for droplet formation with PEG-600 and PFPE (L/M/H) is another challenging surfactant that requires a multistep synthesis approach, yet results in a mixture of di- and tri-block polymers that are a cause of droplet coalescence. Another important issue specifically with fluorinated detergents and surfactants is their environmental impact.

Due to their widespread use numerous detergents and surfactants are known in the art in patent as well as non-patent literature (H. J. Lee et al., Impact of novel detergents on membrane protein studies, Chem 8, 980-1013; N. M. Kovalchuk, M. J. H. Simmons, Review of the role of surfactant dynamics in drop microfluidics, Adva. Coll. Interface Sci., 2023, 312, 1028444). For example, WO2020049294A1 describes the use of dendritic detergents for the analysis of proteins by mass spectrometry, however, the synthesis of these oligoglycerole-based surfactants requires a multi-step synthesis approach, which can lead to scalability issues.

On the other hand, US20200207921 A1 and EP3434712A1 refer to a method for manufacturing deblock copolymers. Here, the author presented a diblock synthesis of oligoglycerol fluorosurfactants using an amide coupling between KyrtoxCOOH (commercially available) and oligoglycerol NH2 of different lengths (multistep synthesis). Amide synthesis is not always straightforward, especially when the reaction mixture is not in a homogeneous solvent (HFE and DMF), leading to a complicated purification procedure. In the past, this problem has already been mentioned by the Weitz group *(*Lab Chip, 2008,8, 1632-1639) in the synthesis of PEG-based triblock crytox surfactants. They obtained three different products, triblock, diblock and free Krytox-COOH.

The synthesizing methods known so far require multiple reaction steps with rather low product yield.

It was therefore an object of the invention to provide a method that overcomes the drawbacks of the conventional methods.

This object was solved by providing a method and the compounds obtained by said method according to the claims

According to a first aspect, a method for obtaining at least one compound with surface active properties is provided, wherein the at least one compound comprises a first hydrophobic block and a second hydrophilic block, wherein the method comprises irradiating a reaction mixture, wherein the reaction mixture comprises
- at least one hydrophobic compound forming said first hydrophobic block comprising at least one double or triple bond of general formulae (Ia) or (lb) 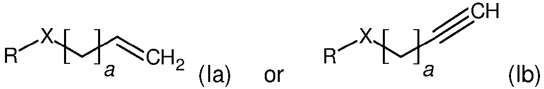
   With a being 0 to 5, preferably 0 to 3, more preferably 0 to 2, even mor preferably 0 or 1;
   with R being a hydrophobic moiety selected from
      a linear or branched or cyclic C6-C20 alkyl moiety, preferably comprising at least one -O- moiety;
      a linear or branched partially or fully fluorinated C5-C40 moiety; preferably comprising at least one -O- moiety,
   with X being one of methylene (-CH₂₋), ether (-O-), thioether (-S-), amide (-CONH), ester (-COO-),
- at least one hydrophilic compound forming said second hydrophilic block of the general formulae (II) R'-SH comprising a glycerol block R' with at least one thiol-moiety, wherein R' comprises m glycerol units with m being 1-15, and
- at least one photo-initiator.

The present synthesis method overcomes the drawbacks of the current synthesis of surfactants suitable for the various applications by a synthetic approach that enables one-pot synthesis suitable for large-scale production of said surfactants, detergents or lubricants. The "Thio-Yne/ene" click chemistry has been used as a tool to synthesize the surfactants. This method not only provides the surfactants in one pot, but the introduction of sulphide group also allows the polarity order of the entire surfactants to be fine-tuned.

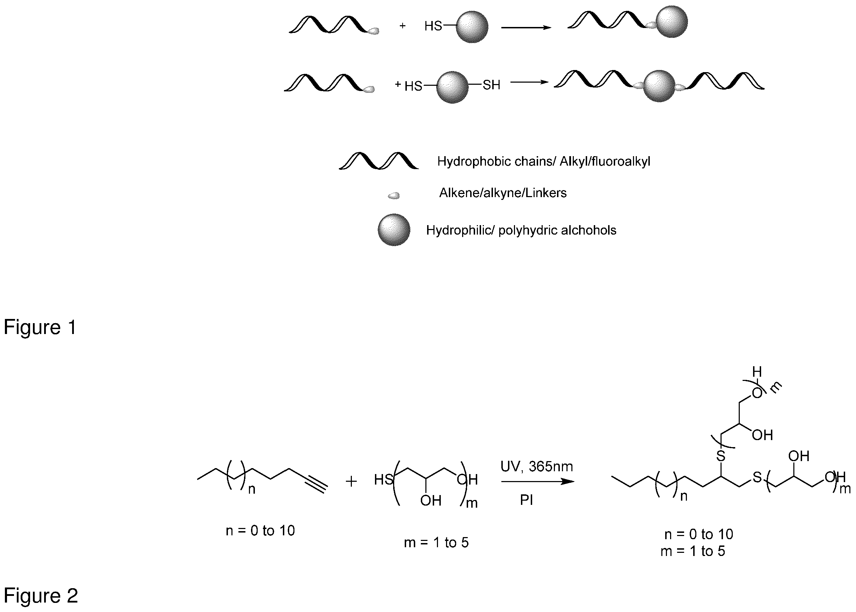

The present method to synthesize surfactants on a large scale in one pot makes use of the "Thio-Yne/ene" click chemistry, combining an alkyne/alkene and a thiol-containing compound. These form the two main segments of the surfactant, one hydrophobic and one hydrophilic. For the hydrophobic alkyne/alkene unit, a large variety of branched or linear or cyclic alkynes with different chain lengths can be used. A general reaction scheme is shown in Figure 1.

In an embodiment of the present method, the reaction mixture comprises
- at least one hydrophobic compound forming said first hydrophobic block comprising at least one double or triple bond of general formulae (Ia) or (lb) 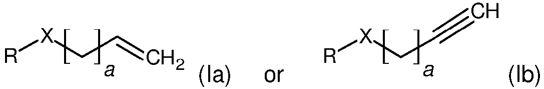
   With a 0 to 3, more preferably 0 to 2, even mor preferably 0 or 1;
   with R being a hydrophobic moiety selected from
      a linear or branched or cyclic C6-C20 alkyl moiety, preferably comprising at least one -O- moiety;
      a linear or branched partially or fully fluorinated C5-C40 moiety; preferably comprising at least one -O- moiety; with X being one of methylene (-CH₂₋), ether (-O-), thioether (-S-),
- at least one hydrophilic compound forming said second hydrophilic block of the general formulae (II) R'-SH, comprising a glycerol block R' with at least one thiol-moiety, wherein glycerol block R' comprises m glycerol units with m being 1-15, and
- at least one photo-initiator.

In an embodiment of the present method, it is provided that in the at least one hydrophobic compound of general formulae (Ia) or (lb)
R is a hydrophobic moiety selected from a linear or branched C6-C15 alkyl moiety, preferably linear or branched C6-C12 alkyl moiety, preferably comprising at least one -O- moiety; or
a linear or branched fully fluorinated C5-C30 moiety; preferably linear or branched fully fluorinated C5-C20 moiety, more preferably linear or branched fully fluorinated C5-C15 moiety, preferably comprising at least one -O- moiety;
with X being one of methylene (-CH₂₋), ether (-O-), thioether (-S-).

In a further embodiment of the present method, it is provided that in the at least one hydrophobic compound of general formulae (Ia) or (lb)
R is a hydrophobic moiety selected from

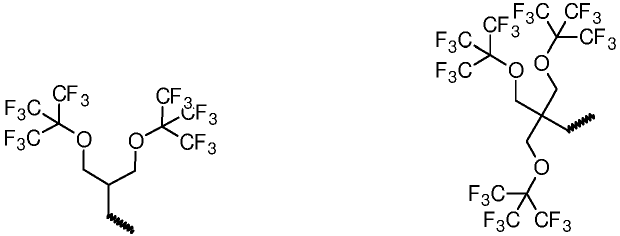

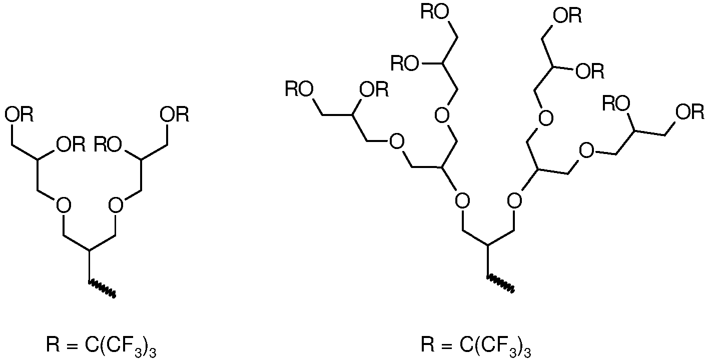

In still a further embodiment of the present method, it is provided that in the at least one hydrophobic compound of general formulae (I)
R is a block according to 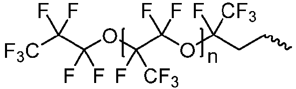
with n being 5 to 30, preferably n being 5 to 20, more preferably n being 5 to 15, even more preferably n being 5 to 10,
with X being one of methylene (-CH₂-), ether (-O-), thioether (-S-).

In one embodiment, in the at least one hydrophilic compound forming said second hydrophilic block of general formulae (II) R' - SH the glycerol block R' comprises glycerol units, in particular oligogylcerol units.

In a further embodiment of the present method, it is provided that the at least one hydrophilic compound of general formulae (II) R' - SH forming said second hydrophilic block has one of the following of general structures: 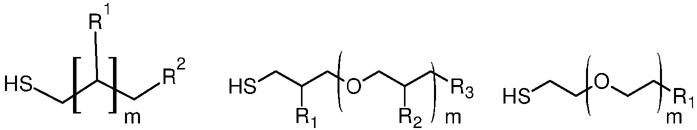
with m being 1-15, preferably 1-10, more preferably 1-5.
with any of R¹, R², R³ being a functional moiety selected from one of -OCH₃, - OH, -SH, -OSO₃, -NH₂, -NH₃⁺, -NH(CH₃), -NH(CH₂CH₃), OPO₄⁻, COOH, -OPO₃, - N+(CH₃)₃, -N+(CH₂CH₃)₃, preferably -OCH₃, - OH, -SH, -OSO₃, -NH₃⁺, -COO⁻, more preferably -OCH₃, - OH, -SH.

In a further embodiment of the present method, it is provided that the at least one hydrophilic compound of the general formulae (II) R' - SH forming said second hydrophilic block comprising at least at least one thiol-moiety is one of the following: 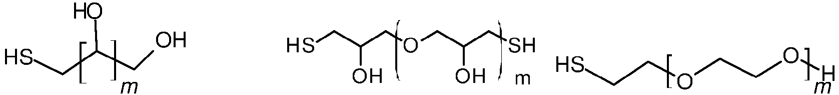 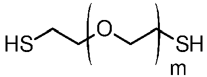 wherein 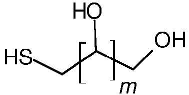 is in particular preferred, and
wherein m being 1-15, preferably 1-10, more preferably 1-5.

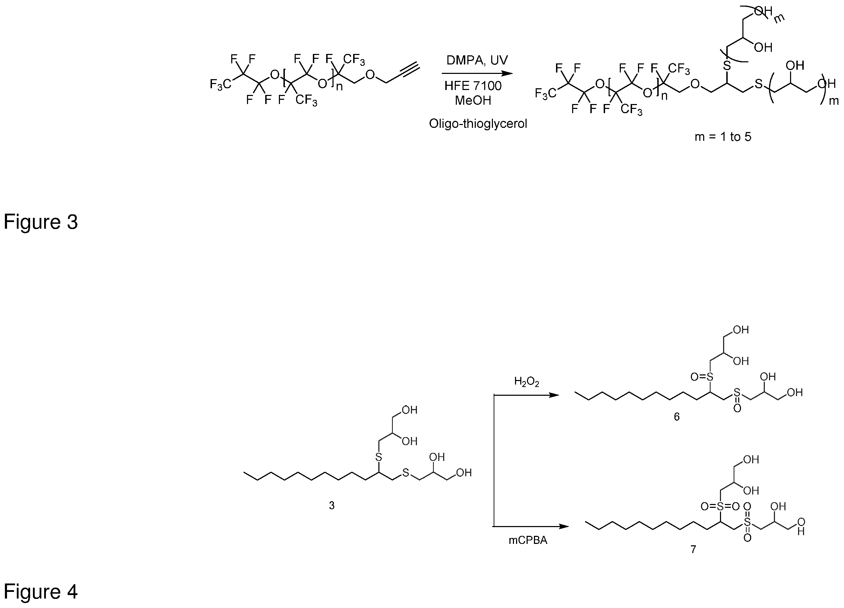

In cases, wherein the hydrophobic part R is a fluorinated moiety, a surfactant or detergent is obtained having a fluorinated side chain (see for example Figure 3). The resulting fluorosurfactants are capable of forming stable microfluidic droplets and can be employed as pico- to nanoliter volume reactors in chemistry and biology. However, such fluorosurfactants also have numerous applications outside the chemistry and biology area and are used in electrical engineering, machinery and the automotive industry, e.g. as high-performance gear lubricants, lubricants for oxygen service, motors, seals, valves and clutches or generally for engines and auxiliary units. In all of these areas fluorosurfactants of the present invention may be employed and are capable to substitute conventional fuorosurfactants such as Krytox^{®}.

In a further embodiment of the present method, in the least one hydrophilic compound of general formulae (II) having the structures as above m is 1 to 15, preferably 1 to 10, more preferably 1 to 5, i.e. upto 15, preferably upto 10, still more preferably upto 5 glycerol units.

In another embodiment, the reaction mixture is irradiated with light in a wavelength in a range between 320 - 380 nm, preferably in a range between 350 and 380 nm, more preferably in a range between 360 and 380 nm, more preferably at 365 nm.

The at least one photo-initiator may be one of the following: dimethylpropylamine (DPMA), TPO (Diphenyl(2,4,6-trimethylbenzoyl)phosphine oxide), or radical photoinitiators known under the brand name Irgacure., for example 2-Hydroxy-4'-(2-hydroxyethoxy)-2-methylpropiophenon, 2-Hydroxy-1-{4-[4-(2-hydroxy-2-methyl-propionyl)-benzyl]-phenyl}-2- methyl-propan-1-one, 2-Hydroxy-4'-(2-hydroxyethoxy)-2-methylpropiophenon.

It is further preferred that the reaction mixture comprises one of the following solvents:polar protic solvents (such as MeOH, EtOH, isopropanol, Water) and polar aprotic solvents (such as THF, DMF, CH3CN, DCM, HFIP, C6F6, C6D6).

In a further preferred embodiment, the sulphide group can be further oxidised under controlled conditions to products bearing sulfoxide and sulfone units without changing the different head groups. This allows access to further detergents and surfactants with different properties.

Accordingly, the reaction product is oxidized in the presence of at least one oxidizing agent. after completing irradiation of the reaction mixture. The intermediate irradiation product may be isolated and subsequently oxidized, or the at least one oxidizing agent is added to the reaction mixture without isolating the intermediate reaction product.

The at least one the at least one oxidizing agent is selected depending on the desired degree of sulfur oxidation. i.e. mono- or di-oxidation. For example, hydrogen peroxide H₂O₂, such as H₂O₂- Tungstate, molybdate, or Ti(O-iPr)₄; NalO₄-RuCl₃, H₂O₂-HFIP, may be used for obtaining sulfoxides (mono-oxidation) or m-Chloroperoxy benzoic acid, Trifluoroperacetic Acid, Chromium trioxide or permanganate may be used for obtaining sulfones (di-oxdiatiion), see also reaction scheme in Figure 4.

As mentioned, the present method allows the synthesis of compounds with surface active properties of the general structure

R-X-(CH₂)₀₋₅ -R'

Wherein R, R' and X have the meanings as described above.

According to one embodiment, said compounds can have one of the following general structures:

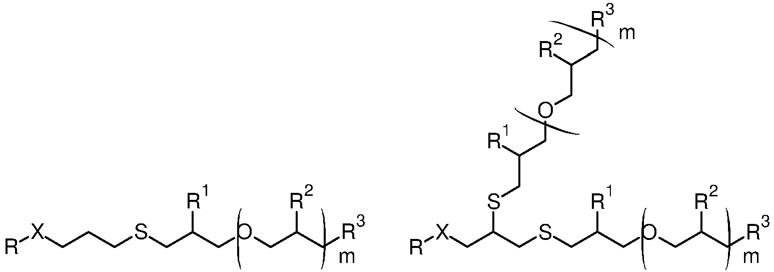

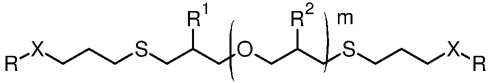

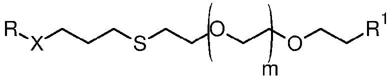

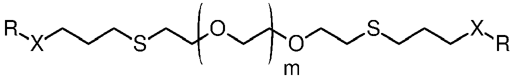

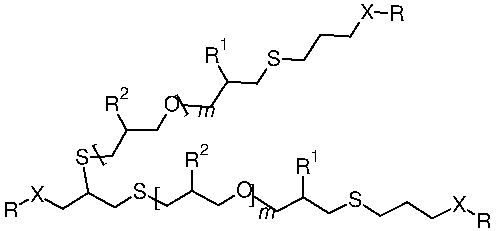

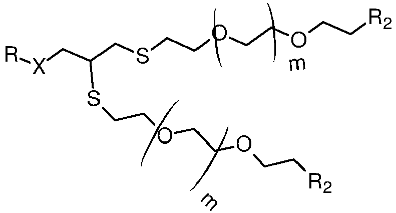

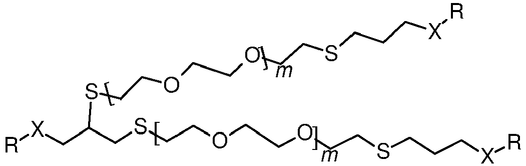

With R, R¹, R², R³, X, m having one of the previously described meanings.

In preferred embodiments, said compounds may have one of the following structures:

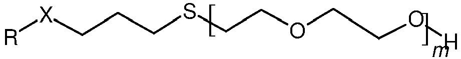

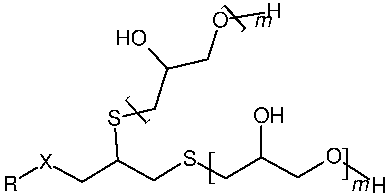

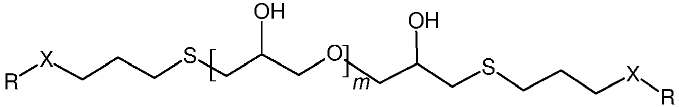

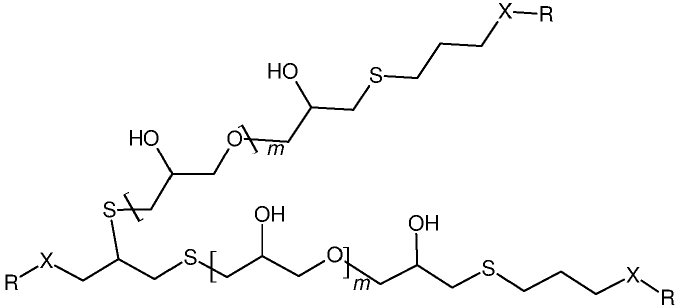

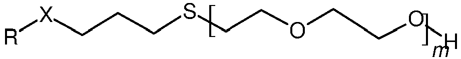

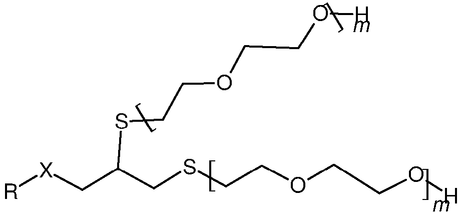

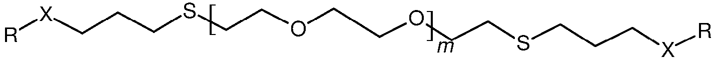

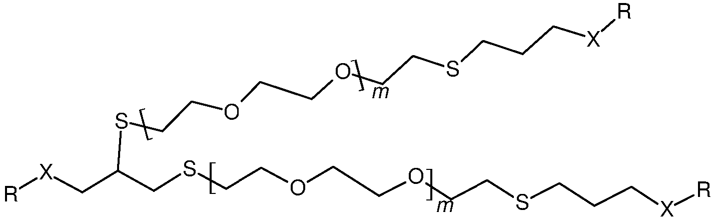

With R, X, m having one of the previously described meanings.

In specific embodiments, the surfactants can have one of the following structures:

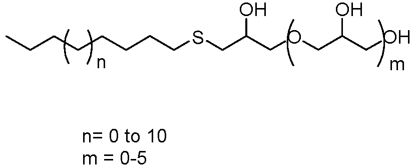

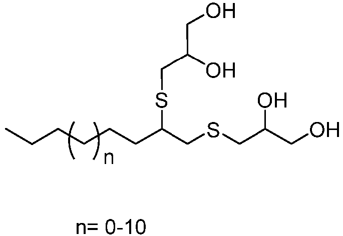

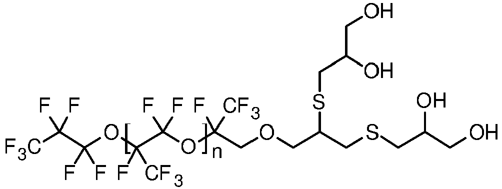

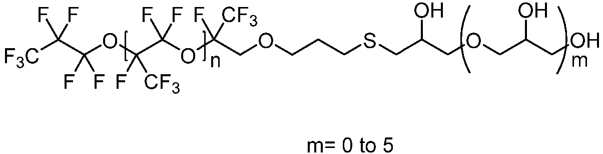

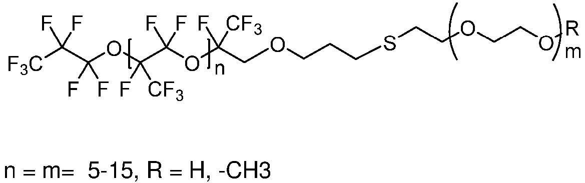

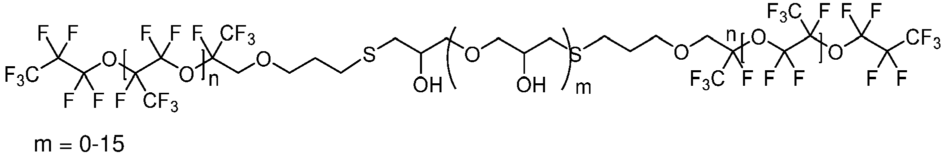

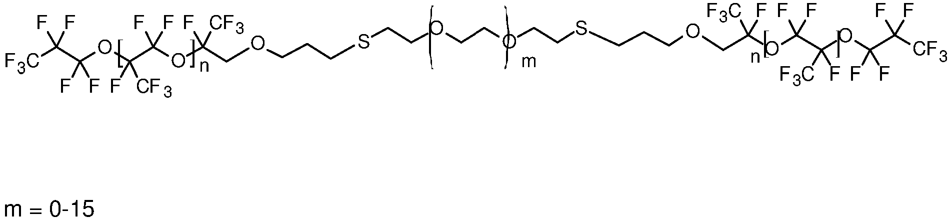

The present method, in particular when carried out in the presence of at least one oxidizing agent, allows further to provide one of the following surfactants:

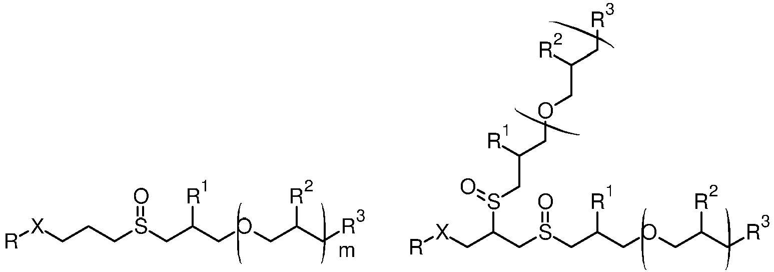

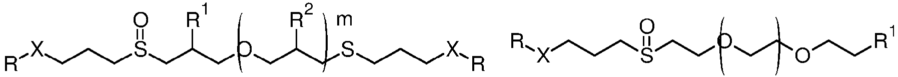

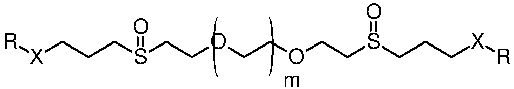

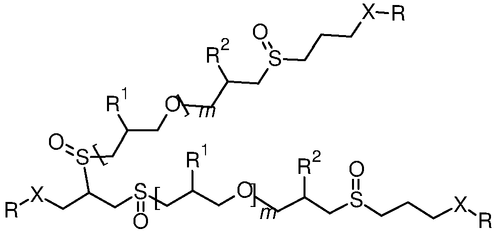

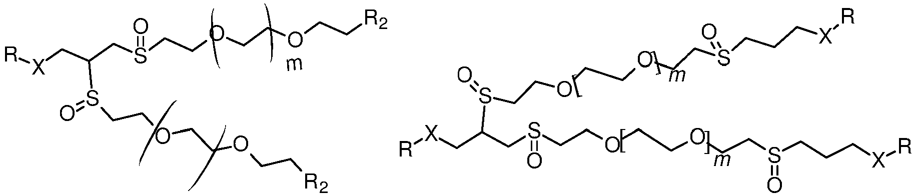

With R, R¹, R², R³, X, m having one of the previously described meanings.

In a further embodiment, one of the following surfactants is provided. 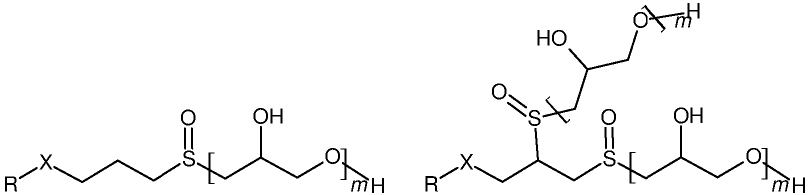 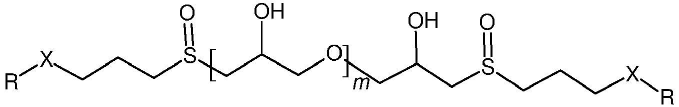 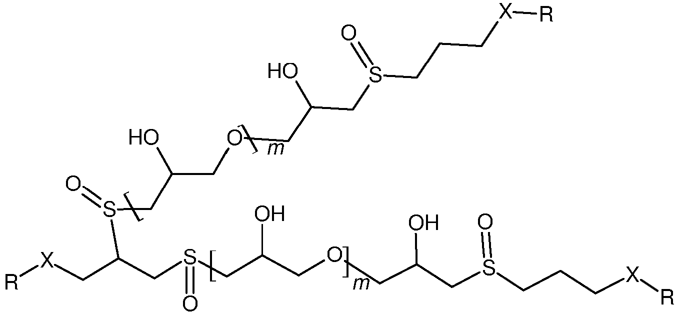 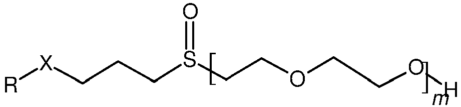 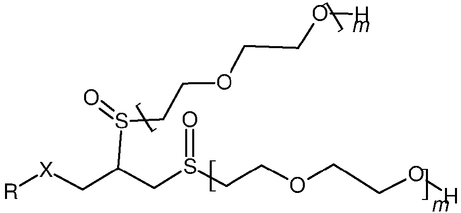 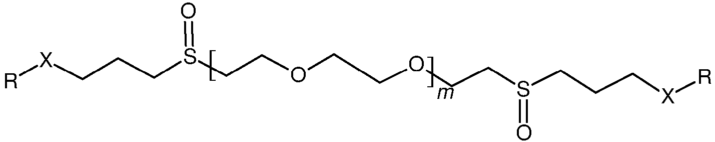 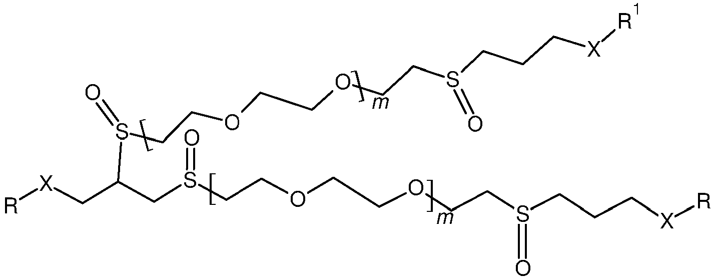 with R, X and m having the meanings as described above.

In specific embodiments, the surfactants can have one of the following structures:

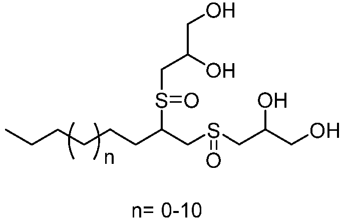

The present method, in particular when carried out in the presence of at least one oxidizing agent, allows further to provide one of the following surfactants:

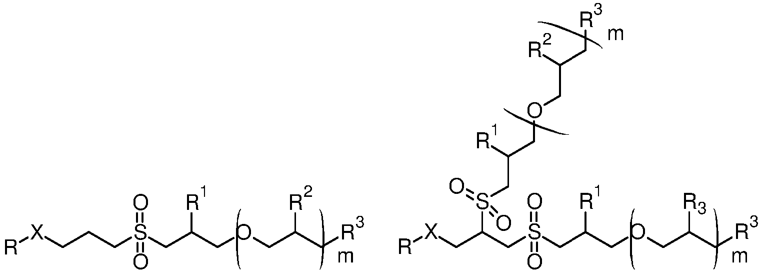

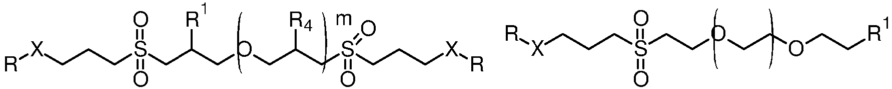

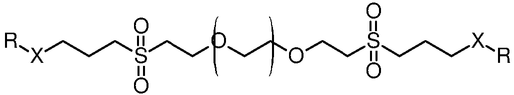

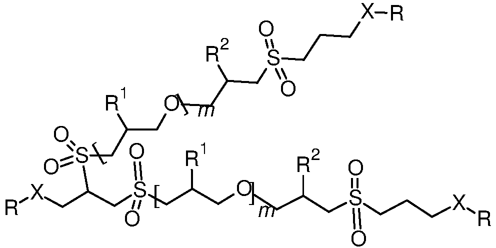

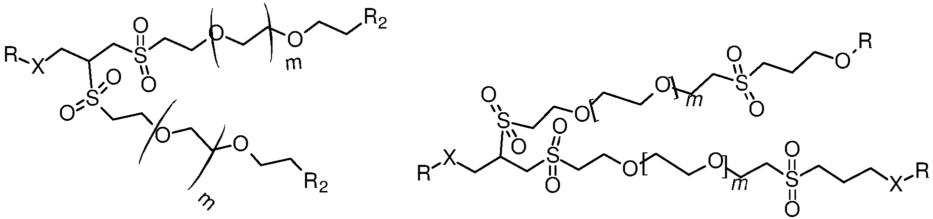

With R, R¹, R², R³, X, m having one of the previously described meanings.

In still a further embodiment, one of the following surfactants is provided. 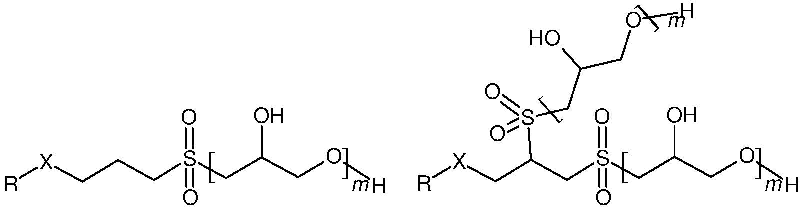 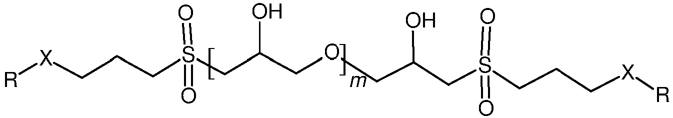 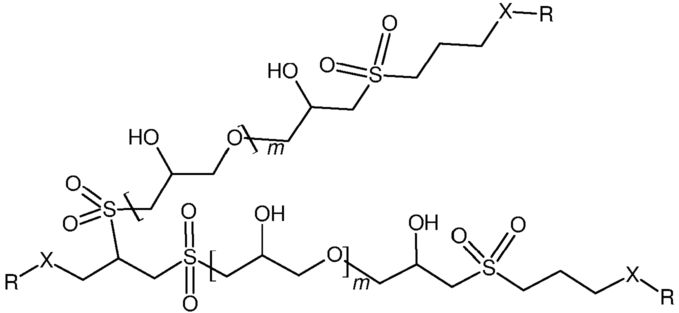 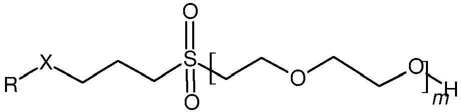 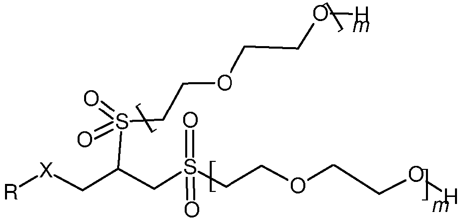 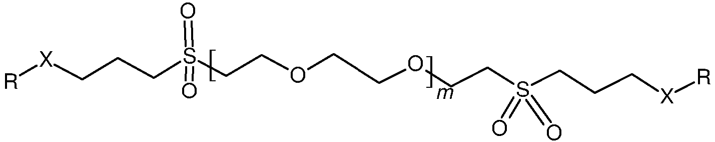 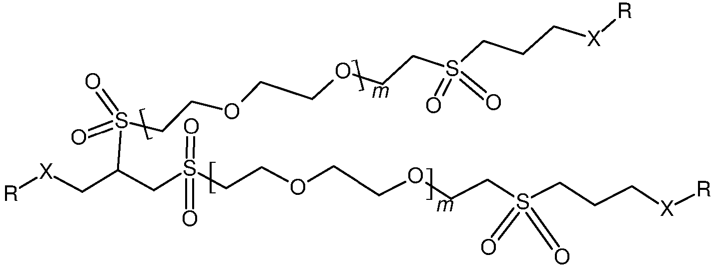 with R, X and m having the meaning s as described above.

In specific embodiments, the surfactants can have one of the following structures:

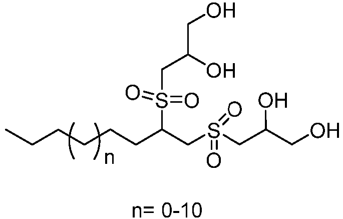

In still a further embodiment, a compound is provided comprising a photocleavable linker L comprising a substituted C6-C10 aryl.

In a variant of the above method, it is also possible to exchange the hydrophobic moiety R of general formulae (Ia) and (lb) by the hydrophilic moiety R' of general formulae (II).

In this case, a hydrophilic compound of general formulae (Ic) and (Id)

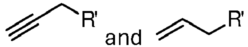

With R' having the meaning as described above is reacted with a hydrophobic compound of general formulae (IIa)

R-SH

With R having the meaning as described above.

This exchange of hydrophilic and hydrophobic moieties in the starting molecules allow providing one of the following compounds:

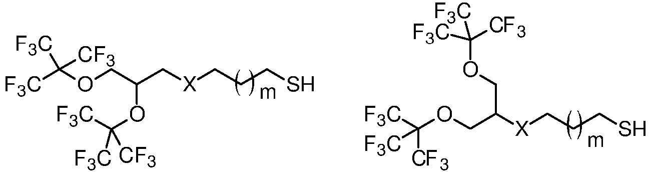

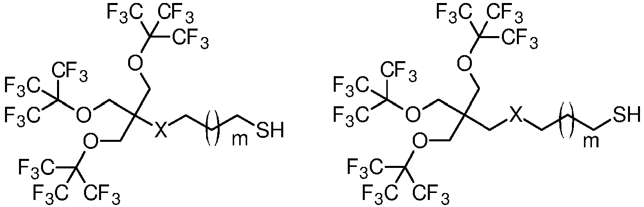

With m having the meaning as described above.

More specific compounds are:

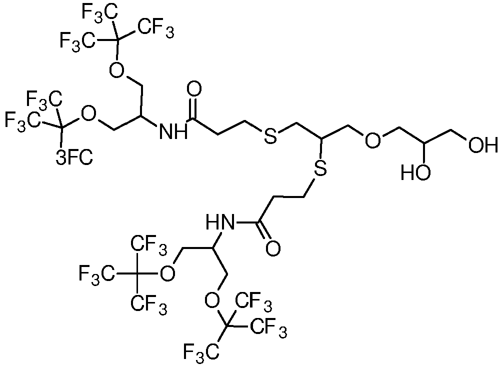

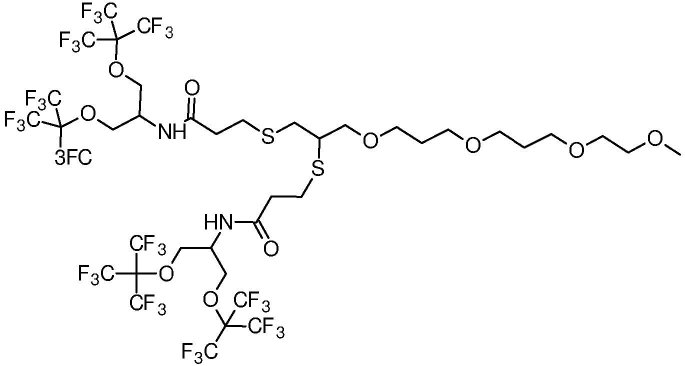

According to a second aspect of the invention, at least one compound having surface active properties is provided, wherein the at least one compound comprises a first hydrophobic block, a second hydrophilic block, and a cleavable linking moiety between said first hydrophobic block and said second hydrophilic block. Said compound has the following general formulae: 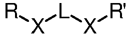
wherein the linker L is an aromatic moiety, and
wherein R, R' and X have the meanings as described above.

In an embodiment, said linker L may be a substituted C6-C10 aryl, and X is one of methylene (-CH₂₋), ether (-O-), thioether (-S-), amide (-CONH-), ester (-COO-).

Other suitable linkers L are one of the following:

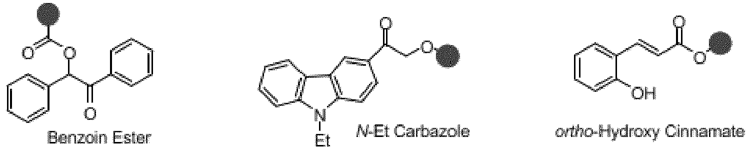

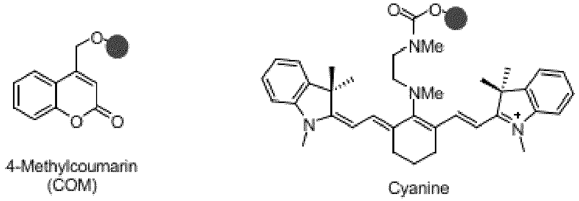

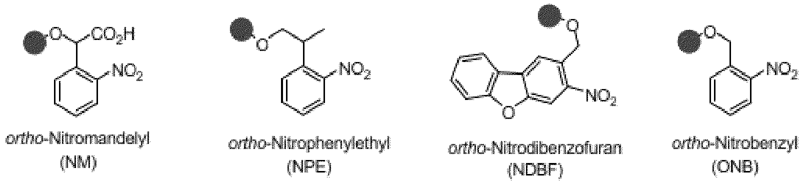

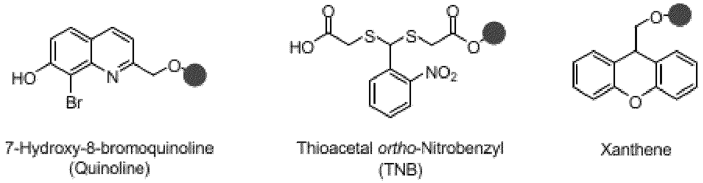

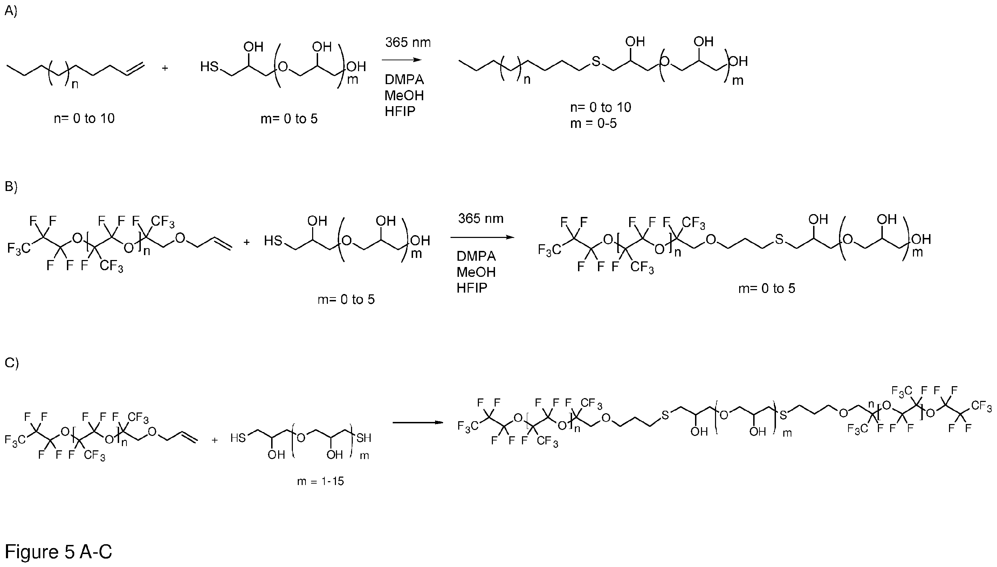

In a more preferred embodiment, said linker L is a substituted C6 aryl, preferably a C6 aryl substituted with -NO₂ and at least one methylol (-CH₂-OH). The substituted C6 aryl may act as a photocleavable linker that is introduced in the surfactant or detergent (see for example Figure 5).

In specific embodiments, the surfactants with such a photocleavable linker can have one of the following structures:

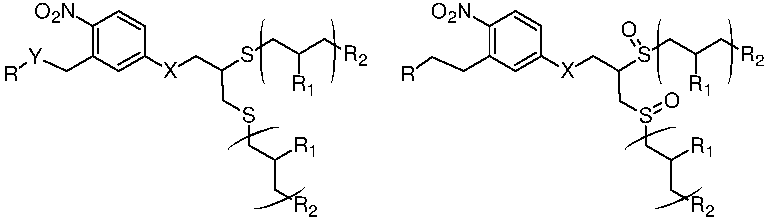

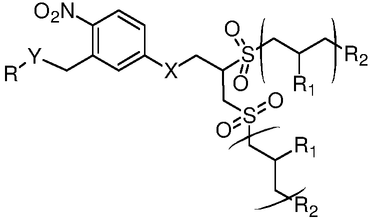

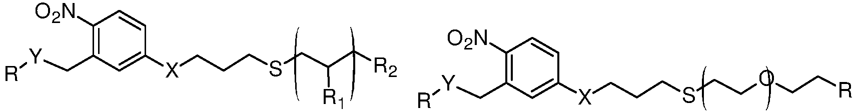

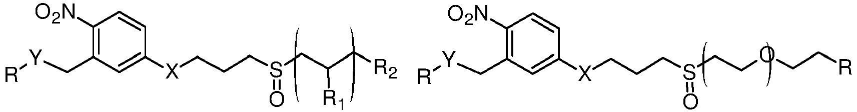

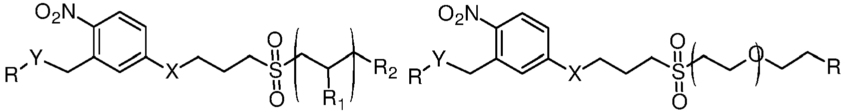

Wherein R, R¹, R², X and m have the meanings as described above

More specific embodiments of said linker containing compounds are:

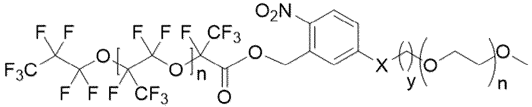

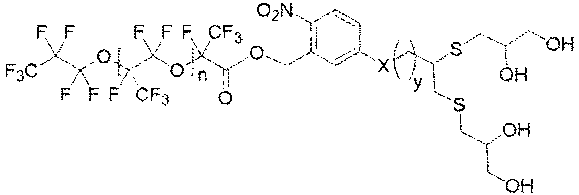

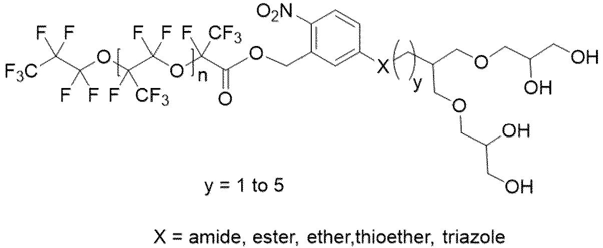

Thus, the hydrophobic and hydrophilic segments of the final surfactant are linked by a responsive linker, which can be activated by various stimuli, such as light, acid/base conditions, or enzymes. In a preferred embodiment the photolabile linker can be irradiated with electromagnetic radiation of a specific wavelength giving rise to photocleavage of said linker. This will help to cleave the self-assembly, which is another option to fine-tune the system for the desired biomedical application. A huge advantage of the use of the photolabile linker in case of fluorosurfactants can be split off after use to then collect the fluorinated moieties for further use or re-use. This contributes to reducing the environmental burden of these fluorinated compounds.

Furthermore, to improve both the sustainability and cost-effectiveness of the products, in the present method a chemical approach is described that facilitates the recycling of fluorinated lubricants such as Krytox^{®} (PFPE) after its intended applications. Given the anticipated concerns about fluorinated molecules in the future and the potential ban by the European Union, recycling of fluorinated lubricants such as Krytox^{®} could be a valuable method of reusing it as a starting material. To realise this, in this invention a photocleavable linker, orthonitrobenzyl (ONB) is introduced. This photocleavable linker addresses two important aspects directly related to the future challenges of droplet microfluidics. 1) It enables the recycling of fluorinated lubricants such as Krytox^{®} (PFPE) for reuse as starting material. 2) If biomolecules or materials need to be isolated from the droplets after the desired application, the droplet can generally be cleaved with another surfactant, e.g. fluoro-octanol. The introduction of this photocleavable approach allows to solve two important problems both economically and sustainably. As of today, no photocleavable surfactants have been introduced to the market.

The compound of general formulae (III) 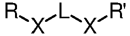 may be obtained in multiple steps.

In a first step, a compound is provided having one of the following structures:

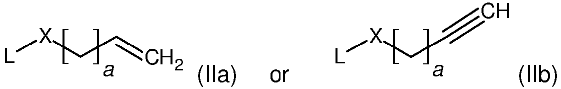

With a being 0 to 5, preferably 0 to 3, more preferably 0 to 2, even mor preferably 0 or 1;
wherein X and L have the above described meanings.

Thus, in this case the hydrophobic moiety R of compound (Ia) or (Ib) is replaced by the linker L.

In a second step, a hydrophobic compound of general formulae (II) with a hydrophilic glycerol block R' is added to the reaction mixture and the reaction mixture is irradiated to obtain an intermediate product of the general structure

L- X-(CH₂)₀₋₅-R'

wherein L, X and R' have the above-described meanings.

In a third step, said intermediate product is reacted with and coupled to at least one hydrophobic compound having the general structure R - X, wherein R is a hydrophobic moiety having the above described meaning and X is a functional group as mentioned above, in particular -OH, -CONH-, to obtain the compound of general structure (III).

It is to be understood that also other synthetic approaches for obtaining compound of general formulae (III) are possible.

For example, instead of using the "thio/Yne/ene" click chemistry, amide or ester coupling may be used.

The invention is explained in detail by means of the following examples with reference to the Figures. It shows:
- Figure 1: a general scheme for the one-pot synthesis of surfactants synthesis with different linker, head (hydrophilic) and tail (hydrophobic) groups according to the present invention;
- Figure 2: examples and synthesis scheme for the different derivatives of alkylated surfactants according to an embodiment of the present invention;
- Figure 3: examples for the synthesis of fluorosurfactants with thio-yne coupling according to an embodiment of the present invention;
- Figure 4: examples for the synthesis of oxidative-responsive surfactants according to an embodiment of the present invention;
- Figure 5: examples and synthesis scheme for the different derivatives of surfactants according to an embodiment of the present invention with thio-ene coupling; and
- Figure 6: Mechanisms of photocleavable linker

Figure 1 shows a general scheme for the one-pot synthesis of surfactants synthesis with different linker, head (hydrophilic) and tail (hydrophobic) groups; The method to synthesize surfactants on a large scale in one pot makes use of the "Thio-Yne/ene" click chemistry, combining an alkyne/alkene and a thiol-containing compound. These form the two main segments of the surfactant, one hydrophobic and one hydrophilic. As shown in the examples below the synthesis has been carried out with yields up to 99% and simple purification, i.e. extraction and washing. The thio-yne reaction was performed using DMPA as a photo initiator and a 365 nm LED lamp. The unreacted thio-glycerol was washed with water and the product was collected in an organic layer (Figure 1). Click chemistry can be confirmed by IR spectroscopy showing the disappearance of the alkyne peak around 2300 nm. Further ¹H and ¹³C NMR and mass spectroscopy were employed to characterize the desired products (cf. examples below).

Figure 2 shows further examples of surfactants/detergents synthesized according to the present invention. In these illustrative examples the hydrophobic part comprises alkane chains from C-10 to C-14 while thio-glycerol was used as a hydrophilic segment.

As illustrated in Figure 3, the hydrophobic part of the surfactant or detergent is a fluorinated side chain.

The scheme of Figure 4 shows modifications of the head groups by oxidation. Surfactants synthesized as exemplified in Figure 1 may further be modified by selective oxidation. For this, two different approaches can be employed: In one of the approaches, the sulfide is selectively oxidized to sulfoxides using H₂O₂ and HFIP as a solvent whereas in 2^{nd} approach the sulfide is fully oxidized to sulfone using mCPBA in DCM. In the example shown in Figure 4, one of the derivatives with a C-12 chain **(4)** was oxidized to sulfone **(6)** and to the sulfoxide **(7)** to prove the concept of fine-tuning the polarity of the head group which has a direct impact on the part of the application. The oxidation was confirmed using IR spectroscopy whereas HRMS was used to validate the intended structures (cf. examples below

Figure 5 A-C show examples and synthesis scheme for the different derivatives of alkylated surfactants of the present invention using a thio-ene coupling approach.

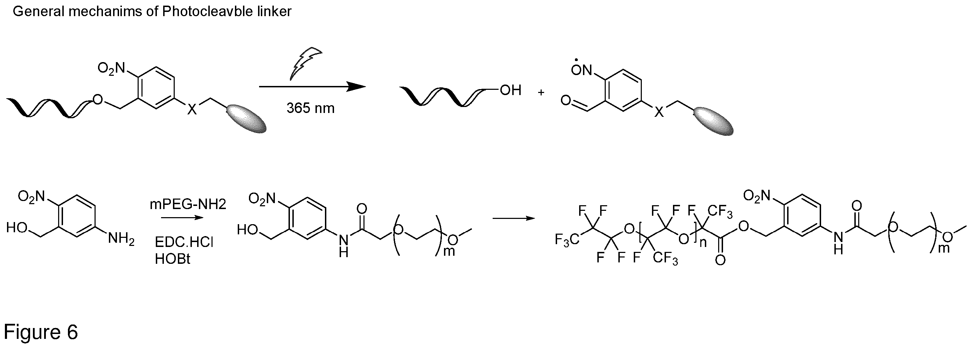

In Figure 6 the general mechanisms of photocleavable linker is illustrated. The linker can be used to separate the two segments, i.e. the hydrophobic and the hydrophilic part, which helps to fine-tune the structural arrangements according to the desired applications. Once the desired application has been performed, the surfactants can be cleaved off and the hydrophobic and hydrophilic parts can be isolated to be reused in the next batch. This has the advantage that the environmental impact of the use of detergents according to the present invention is reduced and that the whole process of applying these surfactants or detergents becomes more sustainable.

### General Procedure to synthesize surfactants employing a thio-alcohol and an alkyne

To perform the click chemistry, thioglycerol or oligothioglycerol (1.5 eq for alkene & 3 eq for alkyne) was taken in round bottom flask, then desired alkylated or fluoro-alkylated alkene and alkyne were taken in the same flask. The required amount of solvent (polar protic or aprotic i.e MeOH, THF, HFIP, HFE-7100) was added to the reaction flask followed by the addition of photo-initiators (DMPA) The whole flask was irradiated at 365 nm for 6-12 h. After the completion the compound was purified and collected for further applications.

To perform the click chemistry, alkyne (1 eq), thio-glycerol (3 eq), and DMAP (0.1eq) were weighed in the round bottom flask. In the reaction mixture, required amount of methanol was added as a solvent. The flask was degassed with argon for 10 minutes then the flask was irradiated with a 370 nm LED lamp for 4 h. The progress of the reaction was monitored using TLC using DCM and Methanol as eluent. After the completion of the reaction, the methanol was removed under reduced pressure. The obtained layer was washed with water and DCM to remove the access this glycerol. The organic layer was dried over sodium sulfate and collected to obtain respective products 1-5 in 95-99% yield.

### Compound 1

Compound 1 was synthesized following the general procedure employing thio-glycerol and dec-1-yne
**¹H NMR** (600 MHz, METHANOL-*D*₄) δ 3.76-3.72 (m, 2H), 3.63-3.54 (m, 4H), 3.01-2.96 (m, 1H), 2.89-2.84 (m, 1H), 2.79-2.57 (m, 4H), 1.88-1.84 (m, 2H), 1.56-1.46 (m, 2H), 1.37-1.32 (m, 10H), 0.92 (t, 3H) ppm; **¹³C NMR** (151 MHz, METHANOL-*D*₄) δ 4.87, 3.76, 3.75, 3.73, 3.72, 3.63, 3.61, 3.60, 3.57, 3.55, 3.54, 3.01, 2.99, 2.96, 2.87, 2.85, 2.79, 2.77, 2.73, 2.70, 2.64, 2.59, 2.57, 1.88, 1.85, 1.84, 1.56, 1.54, 1.49, 1.47, 1.46, 1.37, 1.32, 0.93, 0.92, 0.91 ppm.

### Compound 2

Compound 2 was synthesized following the general procedure employing thio-glycerol and undec-1-yne.
**¹H NMR** (600 MHz, METHANOL-*D*₄) δ 3.76-3.72 (m, 2H), 3.63-3.54 (m, 4H), 3.01-2.97 (m, 1H), 2.89-2.87 (m, 1H), 2.79-2.57 (m, 4H), 1.88-1.84 (m, 2H), 1.56-1.46 (m, 2H), 1.37-1.32 (m, 10H), 0.92 (t, 3H) ppm; **¹³C NMR** (151 MHz, METHANOL-*D*₄) δ 71.97, 71.84, 71.62, 64.65, 64.58, 46.31, 46.25, 46.20, 46.16, 38.65, 38.60, 35.70, 35.60, 33.82, 33.61, 33.25, 29.13, 26.42, 22.41, 13.12 ppm.

### Compound 3

Compound 3 was synthesized following the general procedure employing thio-glycerol and dodec-1-yne
**¹H NMR** (600 MHz, METHANOL-*D*₄) δ 3.73-3.69 (m, 2H), 3.58-3.49 (m, 4H), 2.96-2.93 (m, 1H), 2.84-2.82 (m, 1H), 2.73-2.56 (m, 4H), 1.84-1.80 (m, 2H), 1.52-1.42 (m, 2H), 1.39-1.28 (m, 14H), 0.88 (t, 3H) ppm; **¹³C NMR** (151 MHz, METHANOL-*D*₄) δ 71.97, 71.84, 71.62, 64.65, 64.59, 46.31, 46.27, 46.21, 46.17, 38.63, 35.70, 35.60, 33.83, 33.62, 33.27, 31.76, 29.45, 29.27, 26.44, 22.42, 13.14 ppm.

### Compound 4

Compound 4 was synthesized following the general procedure employing thio-glycerol and tridec-1-yne.
**¹H NMR** (600 MHz, METHANOL-*D*₄) δ 3.73-3.69 (m, 2H), 3.59-3.50 (m, 4H), 2.96-2.94 (m, 1H), 2.84-2.82 (m, 1H), 2.75-2.55 (m, 4H), 1.84-1.80 (m, 2H), 1.52-1.40 (m, 2H), 1.30-1.27 (m, 16H), 0.88 (t, 3H) ppm; **¹³C NMR** (151 MHz, METHANOL-*D*₄) δ 71.97, 71.84, 71.62, 64.65, 64.60, 46.30, 46.26, 46.21, 46.16, 38.65, 35.70, 35.60, 33.82, 33.61, 33.26, 31.76, 29.47, 29.40, 26.43, 22.42, 13.13 ppm.

### Compound 5

Compound 5 was synthesized following the general procedure employing thio-glycerol and tetradec-1-yne
**¹H NMR** (600 MHz, METHANOL-*D*₄) δ 3.76-3.68 (m, 2H), 3.58-3.52 (m, 4H), 2.97-2.92 (m, 1H), 2.88-2.82 (m, 1H), 2.75-2.53 (m, 4H), 1.88-1.79 (m, 2H), 1.56-1.41 (m, 2H), 1.32-1.27 (m, 18H), 0.88 (t, 3H) ppm; **¹³C NMR** (151 MHz, METHANOL-*D*₄) δ 71.97, 71.84, 71.62, 64.65, 64.59, 46.31, 46.27, 46.21, 46.17, 38.63, 35.70, 35.60, 33.83, 33.62, 33.27, 31.76, 29.45, 29.27, 26.44, 22.42, 13.14 ppm.

### Procedure to synthesize oxidative-responsive surfactants

### Oxidation to Sulfoxide:

To oxidize the desired sulfide to a sulfoxide, a controlled amount of hydrogen peroxide (H₂O₂) was added in the presence of solvents such as tetrahydrofuran (THF), dimethylformamide (DMF), hexafluoroisopropanol (HFIP), or hydrofluoroether solvents like HFE 7100 or HFE 7500.

### Oxidation to Sulfone:

For the complete oxidation of the desired sulfoxide to a sulfone, a strong oxidizing agent, such as m-chloroperbenzoic acid (mCPBA), was employed in the presence of solvents like THF, DMF, HFIP, or hydrofluoroethers such as HFE 7100 or HFE 7500.

### Procedure to synthesize linker based surfcatants

A solution of (5-amino-2-nitrophenyl)methanol in DMF was treated with mPEG acid, followed by the addition of EDC·HCl and HOBt to facilitate amide coupling. The reaction mixture was stirred for 24 to 48 hours to ensure completion. After purification of the coupled product, it was subsequently reacted with Krytox-COOH or FSL-COOH in the presence of EDC·HCl and DMAP, using DMF, THF, HFE 7100, or HFIP as the solvent. Washing the final product with methanol or ethanol yielded the desired compounds

## Claims

1. A method for obtaining at least one compound with surface active properties, wherein the at least one compound comprises a first hydrophobic block and a second hydrophilic block, wherein the method comprises irradiating a reaction mixture, wherein the reaction mixture comprises
- at least one hydrophobic compound forming said first hydrophobic block comprising at least one double or triple bond of general formulae (Ia) or (lb) 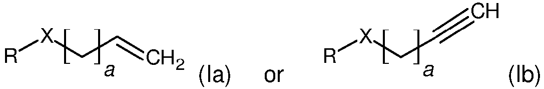
With a being 0 to 5, preferably 0 to 3, more preferably 0 to 2, even mor preferably 0 or 1;
with R being a hydrophobic moiety selected from
a linear or branched or cyclic C6-C20 alkyl moiety, preferably comprising at least one -O- moiety;
a linear or branched partially or fully fluorinated C5-C40 moiety; preferably comprising at least one -O- moiety;
with X being one of methylene (-CH₂₋), ether (-O-), thioether (-S-), amide (-CONH-), ester (-COO-),
- at least one hydrophilic compound forming said second hydrophilic block of the general formulae (II) R'-SH comprising a glycerol block R' with at least one thiol-moiety, wherein R' comprises m glycerol units with m being 1-15, and
- at least one photo-initiator.

2. Method according to claim 1, **characterized in that** the reaction mixture is irradiated with light in a wavelength in a range between 320 - 380 nm, preferably in a range between 350 and 380 nm, more preferably in a range between 360 and 380 nm.

3. Method according to one of the preceding claims, wherein in the at least one hydrophobic compound of general formulae (Ia) or (lb)
R is a hydrophobic moiety selected from a linear or branched C6-C15 alkyl moiety, preferably linear or branched C6-C12 alkyl moiety, preferably comprising at least one -O- moiety; or
a linear or branched fully fluorinated C5-C30 moiety; preferably linear or branched fully fluorinated C5-C20 moiety, more preferably linear or branched fully fluorinated C5-C15 moiety, preferably comprising at least one -O- moiety;
with X being one of methylene (-CH₂-), ether (-O-), thioether (-S-).

4. Method according to one of the preceding claims, wherein in the at least one hydrophobic compound of general formulae (Ia) or (lb)
R is a block according to 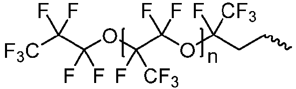
with n being 5 to 30, preferably n being 5 to 20, more preferably n being 5 to 15, even more preferably n being 5 to 10,
with X being one of methylene (-CH₂-), ether (-O-), thioether (-S-).

5. Method according to one of the preceding claims, wherein glycerol block R' in the at least one hydrophilic compound forming said second hydrophilic block of general formulae (II) R' - SH comprises branched glycerol units, in particular branched oligogylcerol units.

6. Method according to one of the preceding claims, wherein the at least one hydrophilic compound of general formulae (II) R' - SH forming said second hydrophilic block has one of the following of general structures: 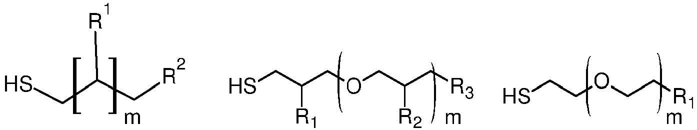 with m being 1 - 15, preferably 1-10, more preferably 1-5, and
with any of R¹, R², R³ being a functional moiety selected from one of -OCH₃, - OH, -SH, -OSO₃, -NH₂, -NH₃⁺, -NH(CH₃), -NH(CH₂CH₃), OPO₄⁻, COOH, -OPO₃, - N+(CH₃)₃, -N+(CH₂CH₃)₃, preferably -OCH₃, - OH, -SH, -OSO₃, -NH₃+, -COO-, more preferably -OCH₃, - OH, -SH.

7. Method accruing to one of the preceding claims, wherein the at least one hydrophilic compound of the general formulae (II) R' - SH forming said second hydrophilic block comprising at least at least one thiol-moiety is one of the following: 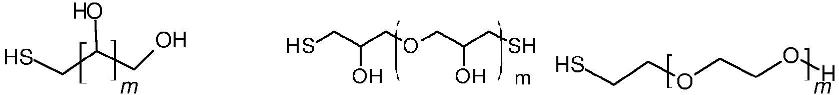 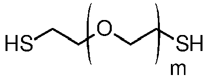 wherein m being 1-15, preferably 1-10, more preferably 1-5.

8. Method according to one of the preceding claims, wherein the at least one photo-initiator may be one of the following: dimethylpropylamine (DPMA), LAP (Lithium phenyl-2,4,6-trimethylbenzoylphosphinate) or radical photoinitiators.

9. Method according to one of the preceding claims, wherein the reaction mixture comprises one of the following solvents: polar protic solvents (such as MeOH, EtOH, Water) and polar aprotic solvents (such as THF, DMF, CH3CN, DCM, HFIP, C6F6, C6D6).

10. Method according to one of the preceding claims, **characterized in that** after completing irradiation of the reaction mixture the reaction product is oxidized in the presence of at least one oxidizing agent, such as H2O2, NalO₄-RuCl3, or m-Chloroperoxy benzoic acid, Trifluoroperacetic Acid, Chromium trioxide or permanganate.

11. Compound with surface active properties obtainable in a method according to one of the preceding claims **characterized by** the following general structure:
R-X-(CH₂)₀₋₅ -R'
wherein R, R' and X have the meanings as described above.

12. Compound according to claim 11, **characterized by** one of the following general structures: 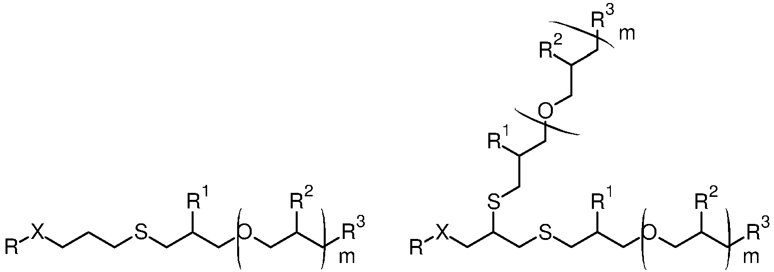 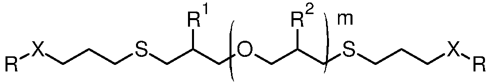 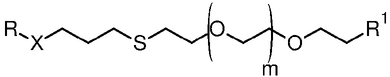 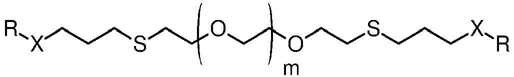 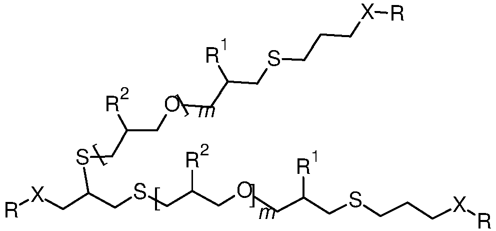 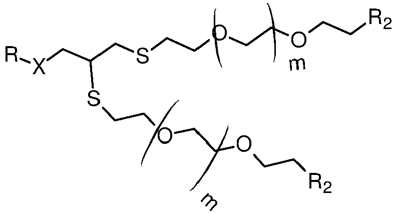 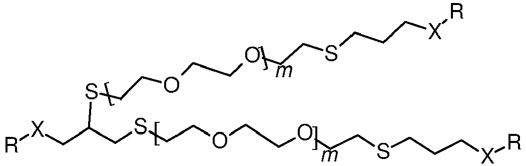 With R, R¹, R², R³, X, m having one of the previously described meanings.

13. Compound according to claim 11 **characterized by** one of the following general structures: 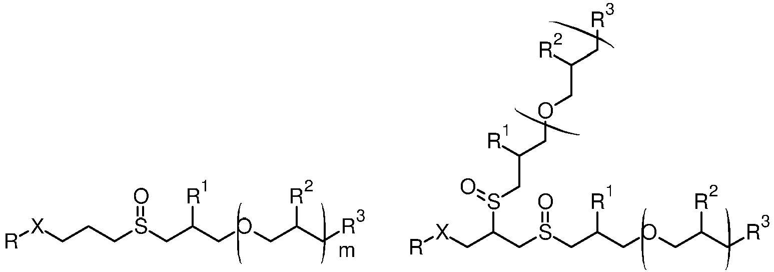 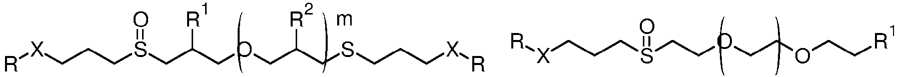 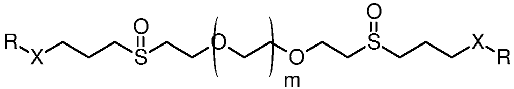 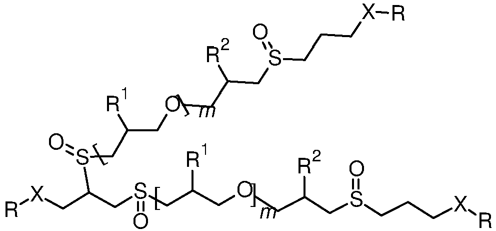 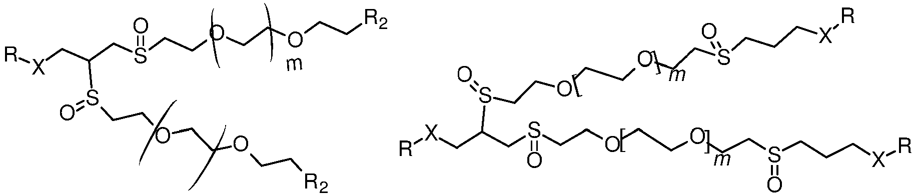 With R, R¹, R², R³, X, m having one of the previously described meanings.

14. Compound according to claim 11 **characterized by** one of the following general structures: 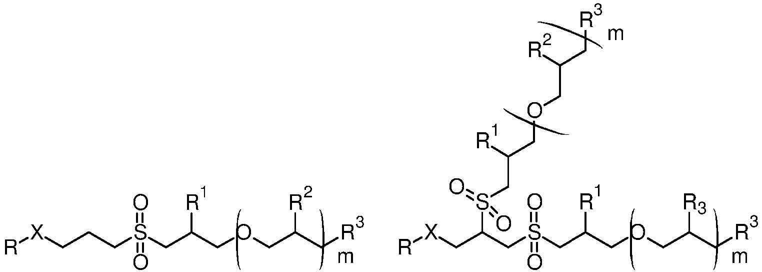 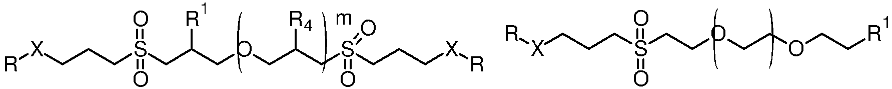 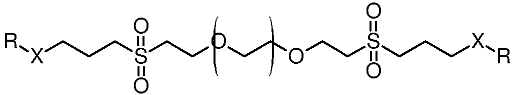 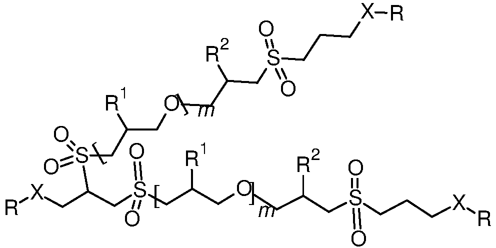 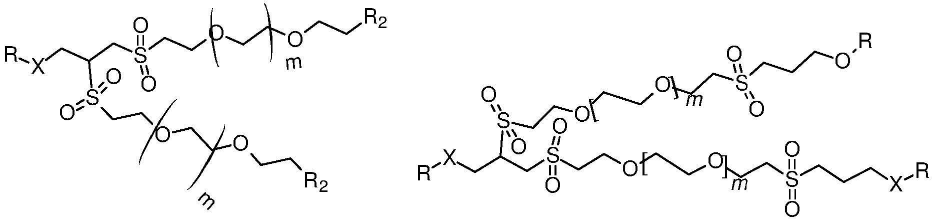 with R, R¹, R², R³, X, m having one of the previously described meanings.

15. Compound having surface active properties is provided, wherein the at least one compound comprises a first hydrophobic block, a second hydrophilic block, and a cleavable linking moiety between said first hydrophobic block and said second hydrophilic block. Said compound has the following general formulae: 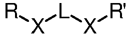 Wherein the linker L is an aromatic moiety, in particular a substituted C6-C10 aryl,and Wherein R, R' and X have the meanings as described above.
